# EUROPÄISCHE PATENTSCHRIFT

(11) **EP 0 833 717 B1**
(45) Veröffentlichungstag und Bekanntmachung des Hinweises auf die Patenterteilung: **14.04.1999**
(21) Anmeldenummer: 96920796.8
(22) Anmeldetag: 05.06.1996
(51) Int. Cl.: B23K 26/10, B29C 53/06, B31B 1/25

(54) **VERFAHREN UND VORRICHTUNG ZUM PERFORIEREN VON BEDRUCKTEM MEHRSCHICHTVERBUNDMATERIAL**
PROCESS AND DEVICE FOR PERFORATING OR CUTTING PRINTED LAMINATED COMPOSITE MATERIALS
PROCEDE ET DISPOSITIF POUR PERFORER OU DECOUPER DES MATERIAUX COMPOSITES STRATIFIES IMPRIMES

(30) Priorität: 12.06.1995 DE 19520713
(43) Veröffentlichungstag der Anmeldung: 08.04.1998
(73) Patentinhaber: SIG Combibloc GmbH, 52441 Linnich (DE)
(72) Erfinder: WEITEDER, Hans, D-52134 Herzogenrath (DE); SCHMIDT, Holger, D-52499 Baesweiler (DE)
(74) Vertreter: Thielmann, Andreas
(86) Internationale Anmeldenummer: EP9602447
(87) Internationale Veröffentlichungsnummer: WO9641698

(56) Entgegenhaltungen:
- EP-A- 0 357 841
- GB-A- 2 161 427

## Beschreibung

Die Erfindung betrifft ein Verfahren und eine Vorrichtung zum Herstellen von Perforationen und/oder Halbschnitten in bedrucktem Mehrschichtverbundmaterial mittels Laserstrahlen wenigstens eines in einer Laserstation angeordneten Lasers.

Mehrschichtverbundmaterial findet Anwendung insbesondere bei der Verpackung von Lebensmitteln in Faltschachtelpackungen. Dabei wird eine Trägerschicht aus Karton, Pappe oder Papier und ggf. eine darauf befindliche Aluminiumfolienschicht beidseitig mit Schichten aus Polyethylen (PE) versehen, um der späteren Packung die nötigen Eigenschaften hinsichtlich Dichtheit, Sauerstoffsperrvermögen, Lichtschutz etc. zu verleihen. Da solche bekannten Packungen in erster Linie für Milch, Saft od. dgl. eingesetzt werden, sind diese Packungen in der Regel mit einem Druckbild versehen, auf dem Angaben zum Inhalt, Hersteller, Werbung od. dgl. angebracht sind.

Das Mehrschichtverbundmaterial wird dabei in der Regel als Bahnmaterial hergestellt, die spätere Packungsaußenseite der Bahn mit den gewünschten Druckbildern versehen und auf Rollen transportiert bzw. der weiteren Verwendung zugeführt. Daraus hergestellte Faltschachtelpackungen haben oftmals Schwächungslinien im Trägermaterial und der äußeren PE-Schicht, um beispielsweise das Einführen von Trinkhalmen in die Packung zu erleichtern oder aber um das Eindringen von Ausgießhilfen zu ermöglichen. Solche Schwächungslinien, die entweder als Perforationen oder aber als Halbschnitte (Schwächungslinien in einer oder mehreren Verbundmaterialschicht/en) ausgeführt sind, müssen daher, um an der "richtigen" Stelle der späteren Packung plaziert zu werden, in Abhängigkeit vom Druckbild in das Verbundmaterial eingebracht werden.

Aus der EP 0 357 841 B1 ist es bereits bekannt, eine Verbundmaterialbahn in Abhängigkeit vom Druckbild an einer Laserstation vorbeizuführen, wobei die Steuerung des Lasers in Abhängigkeit des zuvor gescannten Druckbildes erfolgt. Es ist schnell ersichtlich, daß dieses Verfahren äußerst aufwendig ist, da die Laserbehandlung bei bewegter Bahn vorgenommen wird und daß dazu die Bewegung des Laserstrahls nicht nur die eigentliche Kontur der Einkerbung sondern auch noch die Bahngeschwindigkeit berücksichtigen muß.

Aus der GB 21 61 427 A ist für sich bereits ein Verfahren zum Bearbeiten thermoplastischer Zuschnitte, wie z.B. PVC, bekannt, bei dem in diesen Zuschnitten mittels eines durch eine Maske geführten Laserstrahles Falzlinien erzeugt werden, um aus diesem Zuschnitt einen Container zu Verpackungszwecken zu falten. Dabei werden die PVC-Zuschnitte zur Bearbeitung auf Unterdruck-Tischen durch seitliche Führungen positioniert und dann durch Vakuum fixiert. Demgegenüber kommt das erfindungsgemäße Verfahren bzw. die entsprechende Vorrichtung ohne einen solchen kontruktiven Aufwand aus.

Darüber hinaus ist das Herstellen von Zuschnitten mit glatten Schnitträndern aus Papierbahnen mittels Laserstrahlen für sich auch seit langem bekannt (DE 32 22 394 A1). Des weiteren wurde bereits ein Laserstrahl als Längstrenneinrichtung für Bogenmaterial an bogenbearbeitenden Maschinen eingesetzt, wie aus der DE 26 14 941 A1 für sich bekannt ist.

Der Erfindung liegt daher die Aufgabe zugrunde, ein Verfahren und eine Vorrichtung der eingangs genannten Art so auszugestalten und weiterzubilden, daß der konstruktive Aufwand insbesondere hinsichtlich der Steuerung bei der Herstellung der Perforationen und/oder Halbschnitte minimiert wird, ohne auf die exakte Positionierung der Perforationen und/oder Halbschnitte verzichten zu müssen.

Diese Aufgabe wird bei einem Verfahren der eingangs genannten Art durch die folgenden Schritte gelöst:
- Zerschneiden der Mehrschichtverbundmaterialbahn in einzelne Zuschnitte in Abhängigkeit vom Druckbild und/oder Falzbild,
- Transport der Zuschnitte zur Laserstation,
- Positionierung und Fixierung der Zuschnitte seitlich und in der Ebene der Laserbehandlung mittels Anschlagmitteln, umfassend senkrecht zur Transportrichtung angeordnete Anschlagmittel, und
- Herstellen der Perforations- bzw. Halbschnittlinien bei ruhendem Zuschnitt in Abhängigkeit der Anschläge.

Vorrichtungsmäßig besteht die Lösung der Aufgabe darin, daß eine Vorrichtung zum Zerschneiden der Mehrschichtverbundmaterialbahn in einzelne Zuschnitte, eine Laserstation mit wenigstens einem Laser und entsprechenden Ablenkeinrichtungen zur Führung jedes Laserstrahls sowie Anschlagmittel, welche senkrecht zur Transportrichtung angeordnete Anschlagmittel umfassen, zur Positionierung der der Laserstation zugeführten einzelnen Zuschnitte in der Ebene der Laserbehandlung und entsprechenden Transport- und/oder Stapelmitteln für die einzelnen Zuschnitte.

Erfindungsgemäß wird also nicht mehr die bewegte Mehrschichtverbundmaterialbahn der Laserbehandlung unterzogen, sondern diese wird zunächst zu einzelnen Zuschnitten zerschnitten, welche dann laserbehandelt und aus denen dann schließlich die eigentlichen Packungen hergestellt werden. Da das Bedrucken des Verbundmaterials mechanisch und damit registerhaltig erfolgt, wird die Verbundmaterialbahn ebenfalls registerhaltig in Zuschnitte zerschnitten, so daß die Laserbehandlung nicht mehr in Abhängigkeit vom Druckbild, sondern vielmehr in Abhängigkeit der Zuschnittkanten erfolgen kann. Auf diese Weise ist der konstruktive Aufwand bei dem erfindungsgemäßen Verfahren und der entsprechenden Vorrichtung deutlich geringer als bei dem bekannten Verfahren, da auf eine aufwendige Druckbilderkennung und eine komplizierte bahngeschwindigkeitsabhängige Lasersteuerung verzichtet werden kann.

Gemäß einer bevorzugten Ausführungsform der Erfindung sind die zu behandelnden Zuschnitte während der Laserbehandlung in horizontaler Ebene ausgerichtet. Auf diese Weise wird die Schwerkraft dazu ausgenutzt, um die planen Zuschnitte auf einer Ebene ruhen zu lassen, damit keine Wölbungen, Verwerfungen od. dgl. entstehen können.

Die eigentliche Laserbehandlung der ruhenden Zuschnitte kann dabei nach drei alternativen Möglichkeiten erfolgen. Eine erste Ausführungsform der Erfindung sieht vor, daß die einzelnen Zuschnitte vor der Laserbehandlung gestapelt werden, daß die Laserbehandlung des jeweils oben auf einem Stapel befindlichen Zuschnitts erfolgt und daß die behandelten Zuschnitte einzeln schrittweise vom Stapel zur Seite abgezogen werden. Alternativ ist es jedoch auch möglich, daß die einzelnen Zuschnitte der Laserstation zugeführt und dort gestapelt werden, die Laserbehandlung des jeweils oben auf dem Stapel befindlichen Zuschnitts erfolgt und der unterhalb der Laserstation entstehende Stapel schrittweise nach unten bewegt wird. Oder aber, daß die Zuschnitte vereinzelt der Laserbehandlung unterzogen werden. Bei der ersten und dritten Variante ist es in weiterer Ausgestaltung der Erfindung zweckmäßig, daß die fertigen Zuschnitte hinter der Laserstation gestapelt werden.

Die Auswahl der jeweils optimalen Form der Laserbehandlung richtet sich dabei zunächst nach den zur Verfügung stehenden räumlichen Verhältnissen und betrieblichen Anforderungen. So bietet sich die erste Alternative insbesondere dann an, wenn die zuvor vereinzelten Zuschnitte bereits in Stapelform vorliegen, beispielsweise um zur Laserstation transportiert zu werden. Die zweite Alternative ist immer dann besonders zweckmäßig einsetzbar, wenn die laserbehandelten Zuschnitte ohnehin gestapelt werden sollen. Hierbei kann je nach den betrieblichen Gegebenheiten die Zufuhr der Zuschnitte zur Laserstation unmittelbar oder aber durch die Verwendung eines oder mehrerer Zwischenstapelmagazine erfolgen, um den Druck- und Schneidevorgang einerseits und den Laserbehandlungsvorgang andererseits voneinander zu entzerren.

Nach einer weiteren Lehre der Erfindung ist die Intensität des verwendeten Laserstrahls oder der verwendeten Laserstrahlen einstellbar. Dies ist insbesondere für die Halbschnitterzeugung von großer Wichtigkeit, da - je nach Ausbildung des Mehrschichtverbundmaterials - eine unterschiedlich starke örtliche Verdampfung in einer oder mehreren Schichten des zu entfernenden Materials erforderlich ist.

Vorrichtungstechnisch werden die drei alternativen Verfahren derart betrieben, daß die Anschlagmittel für die Positionierung und Fixierung der zu behandelnden Zuschnitte so ausgebildet sind, daß die Laserstation einen Schacht aufweist, durch den eine Vielzahl horizontal gestapelter Zuschnitte von unten zugeführt wird oder aber daß die Anschlagmittel so ausgebildet sind, daß die einzelnen Zuschnitte der Laserstation seitlich zugeführt werden und daß unterhalb der Laserstation ein Stapelmagazin für die fertig behandelten Zuschnitte angeordnet ist. Zweckmäßigerweise ist gemäß einer weiteren Lehre der Erfindung hinter der Laserstation eine Stapelvorrichtung für die fertig behandelten Zuschnitte angeordnet.

Soll die Laserstatlon nicht mit einem Zuführ- oder Abfuhrschacht zur Beschickung bzw. Entsorgung von Zuschnittsstapeln ausgestattet sein, sind bei einer Vorrichtung gemäß der dritten Alternative die Anschlagmittel so ausgebildet, daß die einzelnen Zuschnitte der Laserstation in der Behandlungsebene zugeführt und wieder abgeführt werden. Für die horizontal der Laserstation zugeführten Zuschnitte bietet es sich an, daß vor der Laserstation Mittel zur Stapelung und Vereinzelung der Zuschnitte angeordnet sind, um die weiter oben bereits beschriebenen Abläufe von Bedrucken und Zerschneiden einerseits und Laserbehandeln andererseits voneinander zu trennen.

Die drei erfindungsgemäßen Varianten sind nachfolgend anhand einer lediglich Ausführungsbeispiele der Erfindung darstellenden Zeichnung näher beschrieben. In der Zeichnung zeigen
- Fig. 1: ein erstes Ausführungsbeispiel einer erfindungsgemäßen Vorrichtung in schematischer Darstellung,
- Fig. 2: ein zweites Ausführungsbeispiel der erfindungsgemäßen Vorrichtung und
- Fig. 3: ein drittes Ausführungsbeispiel der erfindungsgemäßen Vorrichtung.

In der Zeichnung sind gleiche Teile mit gleichen Bezugszeichen versehen. Bei allen drei Varianten werden Zuschnitte 1 von wenigstens einem Laserstrahl eines Lasers 2 über nur schematisch dargestellte Ablenkeinrichtungen 3 perforiert und/oder mit Halbschnittlinien versehen. Die Bewegungsrichtung der Zuschnitte 1 erfolgt in allen drei Figuren in Richtung der nicht näher bezeichneten Pfeile von rechts nach links.

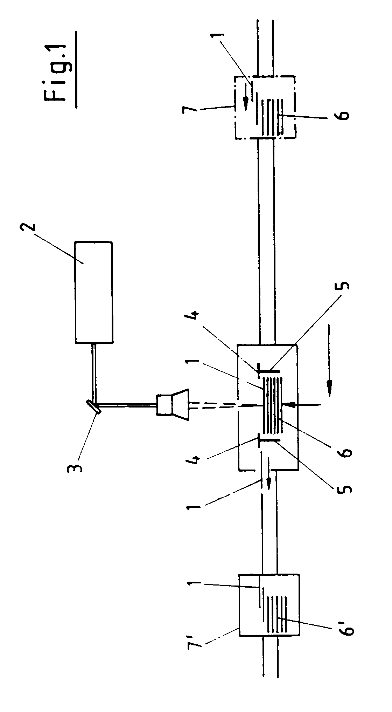

Bei der in Fig. 1 dargestellten ersten Variante erfolgt dabei die Zufuhr der Zuschnitte 1 von unten, wobei der jeweils oberste Zuschnitt 1 von einem Höhenanschlag 4 begrenzt wird, um den Zuschnitt 1 in der Brennebene des Lasers 2 zu fixieren. Dabei sorgt eine gleichfalls nur schematisch dargestellte Schachtführung 5 dafür, daß der zuvor von Zuschnitten 1 gebildete Stapel 6 derart zugeführt wird, daß die Zuschnitte 1 in horizontaler Richtung von den Seitenwänden der Schachtführung spielfrei umgeben sind. Im dargestellten und insoweit bevorzugten Ausführungsbeispiel gemäß Fig. 1 werden die vom Laser 2 fertig behandelten Zuschnitte 1 einem Stapelbildner 7' zugeführt und dort in Stapeln 6' abgelegt. Des weiteren ist in Fig. 1 noch strichpunktiert ein weiterer vorgeschalteter Stapelbildner 7 dargestellt, welcher nach der Vereinzelung der Zuschnitte 1 dazu benutzt wird, um Stapel 6 herzustellen, die dann der eigentlichen Laserstation zugeführt werden.

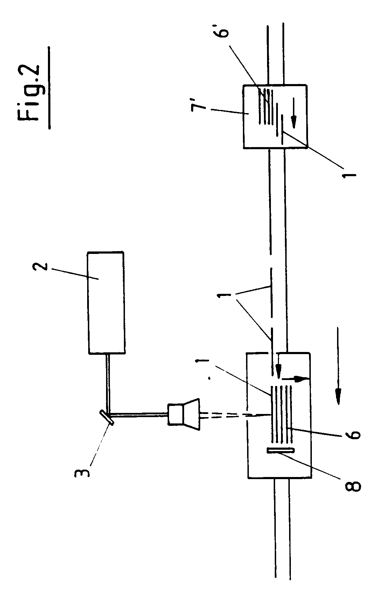

Die in Fig. 2 dargestellte Vorrichtung unterscheidet sich von der in Fig. 1 dadurch, daß die Zufuhr der Zuschnitte 1 in horizontaler Ebene seitlich erfolgt, wobei ein Seitenanschlag 8 dafür sorgt, daß die zu behandelnden Zuschnitte 1 spielfrei fixiert werden. Hierbei erfolgt die Stapelbildung der bereits gelaserten Zuschnitte 1 unterhalb der Behandlungsebene durch schrittweises Absenken der entbehandelten Zuschnitte 1.

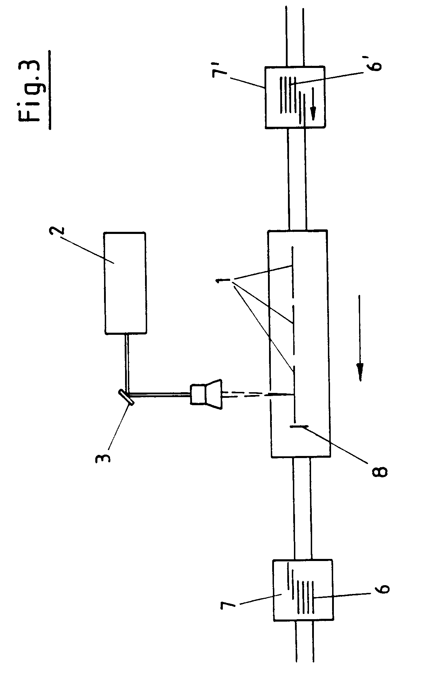

Schließlich ist in Fig. 3 eine dritte Variante der erfindungsgemäßen Vorrichtung dargestellt, bei der sowohl die Zufuhr als auch die Abfuhr der Zuschnitte 1 zur Laserstation in der horizontalen Behandlungsebene erfolgt. Zweckmäßigerweise erfolgt auch hierbei in einem nachgeschalteten Stapelbildner 7 eine Stapelung der Zuschnitte 1 zu Stapeln 6, welche für die anschließende Weiterbehandlung portioniert werden. Auch hierbei kann es zweckmäßig sein, durch einen weiteren der Laserstation vorgeordneten Stapelbildner 7' bereits vorhandene Stapel 6' zu vereinzeln, um eine Trennung der vorgeschalteten Druck- und Schneidevorrichtungen zu erreichen.

## Patentansprüche

1. Verfahren zum Herstellen von Perforationen und/oder Halbschnitten in bedrucktem Mehrschichtverbundmaterial mittels Laserstrahlen wenigstens eines in einer Laserstation angeordneten Lasers, mit folgenden Schritten :
- Zerschneiden der Mehrschichtverbundmaterialbahn in einzelne Zuschnitte in Abhängigkeit vom Druckbild und/oder Falzbild,
- Transport der Zuschnitte zur Laserstation,
- Positionierung und Fixierung der Zuschnitte seitlich und in der Ebene der Laserbehandlung mittels Anschlagmitteln, umfassend senkrecht zur Transportrichtung angeordnete Anschlagmittel, und
- Herstellen der Perforations- bzw. Halbschnittlinien bei ruhendem Zuschnitt in Abhängigkeit der Anschläge.

2. Verfahren nach Anspruch 1,
**dadurch gekennzeichnet**, daß die zu behandelnden Zuschnitte während der Laserbehandlung in horizontaler Ebene ausgerichtet sind.

3. Verfahren nach Anspruch 2,
**dadurch gekennzeichnet**, daß die einzelnen Zuschnitte vor der Laserbehandlung gestapelt werden, daß die Laserbehandlung des jeweils oben auf einem Stapel befindlichen Zuschnitts erfolgt und daß die behandelten Zuschnitte einzeln schrittweise vom Stapel zur Seite abgezogen werden.

4. Verfahren nach Anspruch 2,
**dadurch gekennzeichnet**, daß die einzelnen Zuschnitte der Laserstation zugeführt und dort gestapelt werden, die Laserbehandlung des jeweils oben auf dem Stapel befindlichen Zuschnitts erfolgt und der unterhalb der Laserstation entstehende Stapel schrittweise nach unten bewegt wird.

5. Verfahren nach Anspruch 2,
**dadurch gekennzeichnet**, daß die Zuschnitte vereinzelt der Laserbehandlung unterzogen werden.

6. Verfahren nach Anspruch 3,
**dadurch gekennzeichnet**, daß der Stapel unterhalb der Laserstation schrittweise von unten gegen einen mit seiner Unterkante in der Behandlungsebene des Lasers liegenden Höhenanschlag gefördert werden.

7. Verfahren nach einem der Ansprüche 3 oder 5,
**dadurch gekennzeichnet**, daß die fertigen Zuschnitte hinter der Laserstation gestapelt werden.

8. Verfahren nach einem der Ansprüche 1 bis 7,
**dadurch gekennzeichnet**, daß die Intensität des verwendeten Laserstrahls einstellbar ist.

9. Vorrichtung zum Herstellen von Perforationen und/oder Halbschnitten in bedrucktem Mehrschichtverbundmaterial mittels Laserstrahlen nach einem der Verfahren gemäß den Ansprüchen 1 bis 9, mit einer Vorrichtung zum Zerschneiden der Mehrschichtverbundmaterialbahn in einzelne Zuschnitte (1), einer Laserstation mit wenigstens einem Laser (2) und entsprechenden Ablenkeinrichtungen (3) zur Führung jedes Laserstrahls sowie Anschlagmitteln, welche senkrecht zur Transportrichtung angeordnete Anschlagmittel umfassen, zur Positionierung der der Laserstation zugeführten einzelnen Zuschnitte (1) in der Ebene der Laserbehandlung und entsprechenden Transport- und/oder Stapelmitteln für die einzelnen Zuschnitte (1).

10. Vorrichtung nach Anspruch 9,
**dadurch gekennzeichnet**, daß die Laserstation oberhalb der horizontal angeordneten zu behandelnden Zuschnitte (1) auf der Druckseite angeordnet ist.

11. Vorrichtung nach Anspruch 10,
**dadurch gekennzeichnet**, daß die Anschlagmittel so ausgebildet sind, daß die Laserstation einen Schacht (6) aufweist, durch den eine Vielzahl horizontal gestapelter Zuschnitte (1) von unten zugeführt wird.

12. Vorrichtung nach Anspruch 10,
**dadurch gekennzeichnet**, daß die Anschlagmittel so ausgebildet sind, daß die einzelnen Zuschnitte (1) der Laserstation seitlich zugeführt werden und daß unterhalb der Laserstation ein Stapelmagazin für die fertig behandelten Zuschnitte (1) angeordnet ist.

13. Vorrichtung nach Anspruch 10,
**dadurch gekennzeichnet**, daß die Anschlagmittel so ausgebildet sind, daß die einzelnen Zuschnitte (1) der Laserstation in der Behandlungsebene zugeführt und wieder abgeführt werden.

14. Vorrichtung nach Anspruch 11 oder 12,
**dadurch gekennzeichnet**, daß hinter der Laserstation eine Stapelvorrichtung für die fertig behandelten Zuschnitte (1) angeordnet ist.

15. Vorrichtung nach Anspruch 12 oder 13,
**dadurch gekennzeichnet**, daß vor der Laserstation Mittel zur Stapelung und Vereinzelung der Zuschnitte (1) angeordnet sind.

## Claims

1. A method of producing perforations and/or half-cuts in printed laminated composite material by means of laser beams from at least one laser arranged in a laser station, with the following steps:
- cutting the web of laminated composite material into individual cut sections in accordance with the printed image and/or the folding image,
- conveying the cut sections to the laser station,
- positioning and securing the cut sections laterally and in the plane of the laser treatment by means of stop means, including stop means arranged perpendicular to the direction of conveyance, and
- producing the perforation lines or half-cut lines with the cut section stationary in accordance with the stops.

2. A method according to Claim 1, characterized in that the cut sections to be treated are aligned in a horizontal plane during the laser treatment.

3. A method according to Claim 2, characterized in that the individual cut sections are stacked before the laser treatment; the laser treatment is performed on the cut section at the top of the stack, and the treated cut sections are removed individually from the stack by pulling to the side incrementally.

4. A method according to Claim 2, characterized in that the individual cut sections are conveyed to the laser station, where they are stacked, and the laser treatment is performed on the cut section at the top of the stack, and the stack formed beneath the laser station is moved downward incrementally.

5. A method according to Claim 2, characterized in that the cut sections are subjected to the laser treatment individually.

6. A method according to Claim 3, characterized in that the stack beneath the laser station is conveyed incrementally from beneath toward a height stop arranged with its lower edge in the plane of the laser treatment.

7. A method according to one of Claims 3 or 5, characterized in that the finished cut sections are stacked downstream from the laser station.

8. A method according to one of Claims 1 through 7, characterized in that the intensity of the laser beam used is adjustable.

9. A device for producing perforations and/or half-cuts in a printed laminated composite material by means of laser beams according to one of the methods according to Claims 1 through 9, with a device for cutting the web of laminated composite material into individual cut sections (1), a laser station with at least one laser (2) and suitable deflection equipment (3) for guiding each laser beam plus stop means, including stop means arranged perpendicular to the direction of conveyance, for positioning the individual cut sections (1) conveyed to the laser station in the plane of the laser treatment, and corresponding conveyance and/or stacking means for the individual cut sections (1).

10. A device according to Claim 9, characterized in that the laser station is arranged above the horizontally arranged cut sections (1) to be treated on the printed side.

11. A device according to Claim 10, characterized in that the stop means are designed so that the laser station has a chute (6) through which a plurality of horizontally stacked cut sections (1) are supplied from below.

12. A device according to Claim 10, characterized in that the stop means are designed so that the individual cut sections (1) are conveyed laterally to the laser station, and a stack magazine for the finished treated cut sections (1) is arranged beneath the laser station.

13. A device according to Claim 10, characterized in that the stop means are designed so that the individual cut sections (1) are conveyed toward the laser station and away from it again in the plane of treatment.

14. A device according to Claim 11 or 12, characterized in that a stacking device for the finished treated cut sections (1) is arranged downstream from the laser station.

15. A device according to Claim 12 or 13, characterized in that means for stacking and separating the cut sections (1) are arranged upstream from the laser station.

## Revendications

1. Procédé pour la réalisation de perforations et/ou de coupes à mi-profondeur dans des matériaux composites stratifiés imprimés, à l'aide de rayons laser d'au moins un laser placé dans un poste laser, comprenant les étapes suivantes:
- découpage de la bande de matériau composite stratifié en découpes individuelles en fonction du motif imprimé et/ou du motif de pliage,
- transport des découpes jusqu'au poste laser,
- positionnement et fixation des découpes sur les côtés et dans le plan de l'usinage au laser, à l'aide d'organes de butée comprenant des organes de butée agencés perpendiculairement au sens du transport, et
- réalisation de lignes de perforation et/ou de coupe à mi-profondeur, les découpes étant posées en fonction des butées.

2. Procédé selon la revendication 1, caractérisé en ce que les découpes à usiner sont orientées dans un plan horizontal pendant l'usinage au laser.

3. Procédé selon la revendication 2, caractérisé en ce que les découpes individuelles sont empilées avant l'usinage au laser, en ce que l'usinage au laser est appliqué respectivement à la découpe se trouvant en haut de la pile, et en ce que les découpes usinées sont écartées une à une et graduellement sur le côté de la pile.

4. Procédé selon la revendication 2, caractérisé en ce que les découpes individuelles sont amenées au poste laser et y sont empilées, en ce que l'usinage au laser est appliqué respectivement à la découpe se trouvant en haut de la pile, et en ce que la pile se formant en dessous du poste laser est déplacée graduellement vers le bas.

5. Procédé selon la revendication 2, caractérisé en ce que les découpes sont soumises individuellement à l'usinage au laser.

6. Procédé selon la revendication 3, caractérisé en ce que la pile se trouvant en dessous du poste laser est remontée graduellement contre une butée de hauteur se trouvant avec son bord inférieur dans le plan d'usinage du laser.

7. Procédé selon l'une des revendications 3 ou 5, caractérisé en ce que les découpes terminées sont empilées derrière le poste laser.

8. Procédé selon l'une des revendications 1 à 7, caractérisé en ce que l'intensité du rayon laser mis en oeuvre est réglable.

9. Dispositif pour la réalisation de perforations et/ou de coupes à mi-profondeur dans des matériaux composites stratifiés imprimés à l'aide de rayons laser, en accord avec un des procédés selon les revendications 1 à 9, comprenant un dispositif pour découper la bande de matériau composite stratifié en découpes individuelles (1), un poste laser comprenant au moins un laser (2) et des dispositifs de déflexion (3) correspondants, pour le guidage de chacun des rayons laser, et des organes de butée comprenant des organes de butée disposés perpendiculairement au sens du transport, pour positionner les découpes individuelles (1) amenées au poste laser dans le plan de l'usinage au laser, et des moyens de transport et d'empilage correspondants pour les découpes individuelles (1).

10. Dispositif selon la revendication 9, caractérisé en ce que le poste laser est placé du côté imprimé, au dessus des découpes à usiner (1) agencées à l'horizontale.

11. Dispositif selon la revendication 10, caractérisé en ce que les organes de butée ont une forme telle que le poste laser présente un magasin (6) par lequel une multitude de découpes (1) empilées horizontalement peut être amenée à partir du bas.

12. Dispositif selon la revendication 10, caractérisé en ce que les organes de butée ont une forme telle que les découpes individuelles (1) sont amenées latéralement au poste laser et en ce qu'en dessous du poste laser, on a prévu un magasin à empilage pour les découpes (1) dont l'usinage est terminé.

13. Dispositif selon la revendication 10, caractérisé en ce que les organes de butée ont une forme telle que les découpes individuelles (1) sont amenées au poste laser et évacuées de celui-ci dans le plan de l'usinage.

14. Dispositif selon la revendication 11 ou 12, caractérisé en ce qu'un dispositif d'empilage pour les découpes (1) dont l'usinage est terminé est prévu derrière le poste laser.

15. Dispositif selon la revendication 12 ou 13, caractérisé en ce que des moyens d'empilage et de séparation des découpes (1) sont prévus en amont du poste laser.
